# EUROPEAN PATENT SPECIFICATION

(11) **EP 1 487 232 B1**
(45) Date of publication and mention of the grant of the patent: **11.08.2010**
(21) Application number: 04300373.0
(22) Date of filing: 11.06.2004
(51) Int. Cl.: H04Q 11/00, H04L 12/56, G06F 1/24

(54) **Intelligent fault recovery in a line card with control plane and data plane separation**
Intelligente Fehlerbehebung in einer Leitungskarte mit getrennter Steuerungsebene und Datenebene
Reprise intelligente après défaillance dans une carte de ligne avec séparation de plan de contrôle et plan de données

(30) Priority: 13.06.2003 US 460352
(43) Date of publication of application: 15.12.2004
(73) Proprietor: Alcatel Lucent, 75008 Paris (FR)
(72) Inventor: Wong, Kin Yee, Nepean, Ontario K2J 3B1 (CA); McKay, David George, Ottawa, Ontario K1N 8P5 (CA); Rorai, Joseph Graham, Kanata, Ontario K2K 2N5 (CA)
(74) Representative: Nicolle, Olivier

(56) References cited:
- EP-A- 1 195 951
- EP-A- 1 298 861
- US-A- 5 636 341
- US-A1- 2002 097 672
- US-B1- 6 601 186

## Description

### Field of the invention

The invention relates to communication network infrastructure fault tolerance, and in particular to methods and apparatus for increasing reliability and availability of communication network infrastructure.

### Background of the invention

In the field of communications, communications networks convey service content such as, but not limited to: signals, bytes, data packets, cells, data frames, etc. between communications network nodes over interconnecting links in accordance with a variety of content transport disciplines, such as but not limited to: circuit-switching, packet-switching, Time Division Multiplexing (TDM), Wavelength Division Multiplexing (WDM), etc., and in accordance with at least one transmission protocol, such as but not limited to: Internet Protocol (IP), Plesiochronous Digital Hierarchy (PDH), MultiProtocol Label Switching (MPLS), X.25, Ethernet, Frame Relay (FR), Asynchronous Transfer Mode (ATM), Synchronous Optical NETwork (SONET) / Synchronous Digital Hierarchy (SDH), etc.

Communication network nodes may be categorized in accordance with functionality provided such as, but not limited to: aggregation, distribution, transport, hub, repeater, switch, router, bridge, firewall, gateway, etc. and infrastructure component type such as, but not limited to: core, edge, provider equipment, customer premise equipment, etc.

Recent component miniaturization and box consolidation trends have led to communications network node equipment which combines diverse functionality into a single network node unit. The consolidation of diverse functionality in a single communication network node unit increases the risk associated with failures experienced by a certain function and/ or subcomponent to propagate and affect another function and/ or another subcomponent.

It is typical for customer premise equipment to be implemented as a single network node unit having a specific customized functionality set. Although some customer premise equipment can have its functionality upgraded via a software upgrade, it is atypical for new functionality to be added once the unit is deployed. The relative small scale of customer premise equipment provides opportunities for development cost savings by implementing the small scale functionality in hardware (which is typically preferred for customer premise equipment). Typically, customer premise equipment, used in communications networking, provides access for a Local Area Network (LAN) to an external Wide Area communications Network (WAN), such as the Internet but not limited thereto.

While fault tolerance is important for customer premise equipment, the small size and relatively less complex design thereof typically lends itself to resetting the entire customer premise equipment network node unit when problems are encountered. Resetting access customer premise equipment temporarily cuts off all connectivity to the external communications network while the access customer premise equipment comes back on-line. Services typically experience outages during the reset. Without diminishing the importance of customer premise equipment, resetting customer premise equipment therefore is considered as having a localized impact on services.

In contrast, when taking into consideration factors such as: miniaturization, box consolidation, multi-functionality, fault tolerance, etc. in designing provider equipment type communications network node units, fault isolation is very important because of the very large amounts of content being processed concurrently therethrough for a corresponding very large number of concurrent service connections. Should a fault affect an entire typical provider equipment network node unit, a core network no de for example, vast amounts of data being conveyed would be lost. Therefore resetting a provider equipment is considered to have a great impact on services.

To this end, and because of a continuing research and development of content transport technologies (hardware, protocols, services, and service disciplines), provider equipment typically enjoys a modularized design. Modularization is pervasive, from microchip level to an entire network node unit and also solves logistic issues related to deployment, and maintenance.

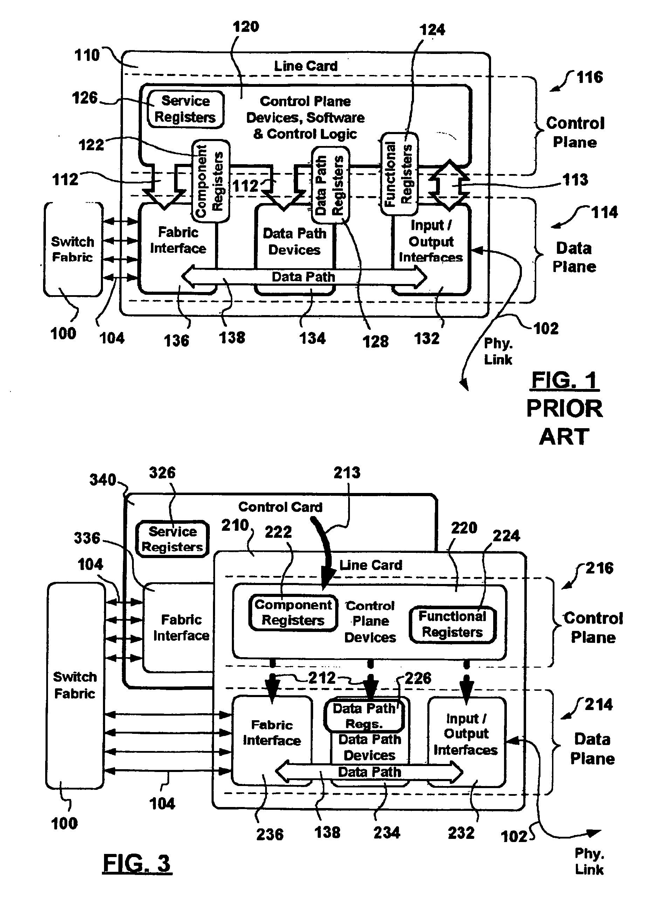

Typically, modularization and functionality separation is provided along transport technology and transport protocol lines. For example, a switching node unit may be adapted to concurrently convey encapsulated content segments in accordance with an exemplary multitude of transport protocols such as, but not limited to: Ethernet, ATM, and SONET; support for which is typically implemented on discrete line cards. The exemplary Ethernet transport protocol relates to non-deterministically transporting data segments in a packet structure having a variable payload length and a variable packet header. The exemplary ATM transport protocol relates to deterministic transporting of fixed size data segments in a cell structure having a header identifying a particular service connection. The exemplary SONET transport protocol relates to transporting multiple streams of data in frames in accordance with a TDM discipline. The switching node processes Ethernet, ATM, and SONET encapsulated content concurrently, and has a switching fabric 100, show in FIG. 1, for this purpose. Transport protocol specific line cards 110 interface with the switching fabric 100 to exchange the respective content being conveyed therebetween.

The specific functionality of each prior art line card 110, schematically shown in FIG. 1, typically includes content processing logic and control logic. The content processing logic operates in accordance with control logic issued directives 112. For this reason, in the field, the content processing logic portion of a line card 110 is referred to as the data plane 114, and the control logic portion of the line card 110 is referred to as the control plane 116.

Typical prior art control plane 116 designs include: control plane devices 120, and (line card) component operational registers 122, (transport protocol specific) functional registers 124, (transport control and signaling) service registers 126, and (content switching related information) data path registers 128. Typical prior art line card 110 designs incorporate shared registers 122, 124, 126, and 128 between the control plane 116 and the data plane 114, and the registers 122, 124, 126, and 128 are typically employed in issuing the directives 112 therebetween.

The design of the data plane 114 includes: input/ output interfaces 132, also know as physical ports, providing physical connectivity to physical links 102 to physically receive and transmit content; data path devices 134; and a fabric interface 136 providing physical connectivity 104 to the switching fabric 100. The sequence of input/ output interface 132, data path devices 134, and fabric interface 136 that takes content as it is being conveyed through, defines a data path 138.

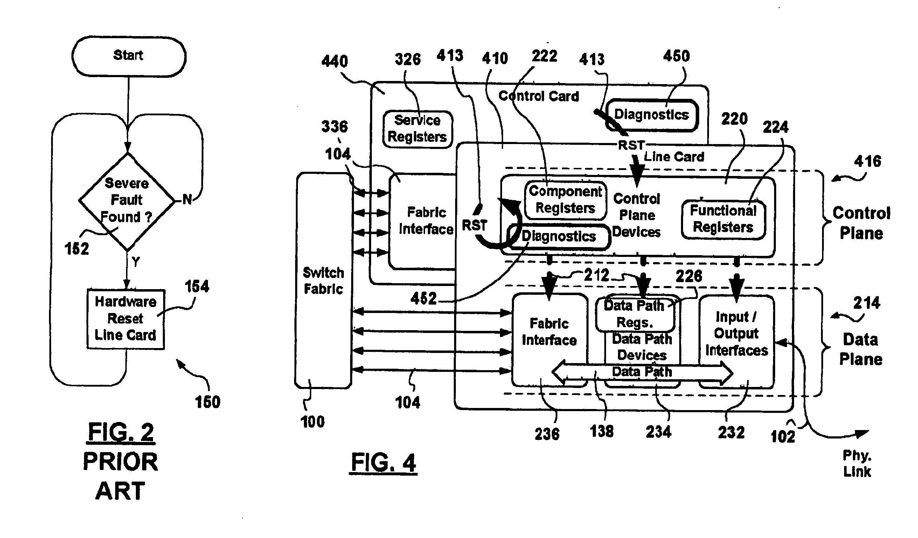

The typical prior art coupling between the control plane 116 and the data plane 114, shown in FIG. 1, does not provide fault tolerance as provisioned services suffer outages during experienced faults. A typical prior art fault recovery process 150, presented in FIG. 2, includes resetting 154 the line card component 110 upon detecting a severe fault 152 in the line card component 110. Performing the actual step of resetting 154 the line card component 110 and implementing the fault detection step 152 is typically done externally in the prior art.

Consider a scenario in which a fault has been detected on the line card 110 and no stand-by redundant line card 110 is available. If the fault is considered serious enough, common practice in mitigating the effects of the fault includes performing a hardware reset of the line card 110 to hopefully bring the line card 110 back into service with the fault cleared. This has the effect of resetting all control devices 120, resetting all data path devices 134, restarting the software, and clearing all component 122, functional 124, and service 126, and data path 128 registers to known states. While the reset may bring resolution to the fault, the downside is that the reset action takes out then currently provisioned services for the entire amount of time during which the line card 110 restarts and recovers. The outage may typically last for a number of minutes.

Prior art fault detection functionality is typically implemented off the line card 110 and a human operator is typically involved in identifying the line card component 110 experiencing the fault, determining the cause of the fault, and manually resetting 154 the line card 110 when necessary. Human involvement is slow, represents a potential source for error, and therefore services suffer from long service outage time periods.

In achieving a high degree of fault tolerance, it is desirable to isolate faults to the extent possible. Intense research and development is needed to achieve this goal.

The ratio between the amount of time the communications infrastructure is able to convey content across, to the amount of time the communications infrastructure is not able to convey content across, is known as "network availability". Each interconnecting link, communications network node unit, switching fabric, line card, etc. has an associated availability. Maximizing network availability is of utmost importance. If excessive, the cost impact of service outages can be significant to service providers leading to Service Level Agreement (SLA) penalties and ultimately to lost business, and to end users leading to loss of productivity. Therefore, equipment vendors are tasked with the challenge to design networks and equipment providing a high degree of reliability.

In achieving a high degree of availability, it is desirable that the data path 138 remain unaffected during the duration of all and each service session provisioned though an exemplary line card 110. To this end, patent application EP 1195951 entitled "Method and Apparatus for Maintaining Data Communications During a Line Card Soft Reset Operation" describes an improved line card 210, shown in FIG.3 providing separation between a control plane 216 and a data plane 214 thereof for the purposes of live upgrading line card component software.

A severable physical connectivity 212 between the control plane 216 and the data plane 214 is shown in FIG.3. The data path registers 226 are solely associated with the data path devices 234 enabling continuous operation of the data plane 214 during a control plane reset (213). Once the control plane 216 is reset, the control devices 220 read the data path registers 226 providing continued line card 210 operation. Functional registers 224 and component registers 222 are solely associated with the control plane 216 to enable their independent reset from data path registers 226. The input/output devices 232 and fabric interface 236 are designed to provide continued operation independent of the control plane 216 during a control plane 216 reset operation to the extent to which the input/output devices 232 and fabric interface 236 have been instructed 212 to operate prior to the control plane reset 216.

Also shown in FIG.3, is a control card 340. The control card 340 has a fabric interface 336 for interfacing 104 with the switching fabric 100. Service registers 326 are associated with the control card 340, the control card 340 being used to process signaling information related to provisioning services via the line card 210. The exchange of signaling information in a communications network enables controlled content transport therethrough and includes, but is not limited to: Open Shortest Path First (OSPF) signaling, Resource Reservation Protocol (RSVP) signaling, Intermediary System to Intermediary System (IS-IS) signaling, Private Network-Network Interface (PNNI) signaling, Interim Local Management Interface (ILMI) signaling, etc. The separation of content transport and signaling over the line card 210 and the control card 340, in accordance with the solution presented in the above mentioned patent EP 1 195 951, enables a manual hitless live upgrade of line card software and a manual reset 213 of the control plane, ensuring that ongoing service sessions remain unaffected during the software upgrade.

Although the solution proposed in the above mentioned patent EP 1 195 951 provides separation between the control plane 216 and the data plane 214 during software upgrades, improvements in availability are limited to rare software upgrade instances. As a software upgrade is an operator supervised task, the slow and error prone human involvement could negatively impact availability.

In the field of communications there therefore is a need to solve the above mentioned issues to improve availability.

### Summary of the invention

In accordance with an aspect of the invention, an intelligent method for self-recovery from faults in a line card is provided. The line card has severable control and data planes. The method steps include: determining whether a detected fault is a service affecting fault; determining whether the detected service affecting fault does not affect the data plane; and resetting the control plane only in an attempt to restore functionality to the line card. The resetting of the control plane only, provides an engineered response in mitigating the effects of the detected fault.

In accordance with another aspect of the invention, the method further includes steps of: determining whether the detected fault does not have a predictable service impact; and based on meta-information, determining a reset response providing an engineered mitigation of the detected fault. Meta-information includes knowledge regarding: whether protection bandwidth is available, whether the communications network node experiencing the fault is a core or an edge network node, whether permanent connections have been established via the line card experiencing the detected fault.

In accordance with a further aspect of the invention, a line card operable in a communications network node is provided. The line card has a control plane severable from a data plane thereof during a reset operation of the control plane ensuring continued service provisioning via the line card; and intelligent self-diagnostics logic for resetting the control plane of the line card based on determining the service impact of a detected fault. An engineered reset response is provided in an attempt to restore functionality to the line card upon detecting the fault.

In accordance with yet another aspect of the invention, a communications network node is provided. The communications network node has at least one line card having a control plane severable from a data plane thereof during a reset operation of the control plane ensuring continued service provisioning; and intelligent diagnostics logic for resetting the control plane of the line card based on determining the service impact of a detected fault. An engineered reset response is provided in an attempt to restore functionality to the line card upon detecting the fault.

Advantages are derived from an engineered response to detected faults providing an increased line card component availability, and therefore an increased overall communications network infrastructure availability.

### Brief description of the drawings

The features and advantages of the invention will become more apparent from the following detailed description of the preferred embodiments with reference to the attached diagrams wherein:
FIG. 1 is a schematic diagram showing subcomponents implementing a typical prior art line card component of an exemplary communications network node;
FIG. 2 is a schematic flow diagram showing a typical prior art fault recovery process;
FIG. 3 is a schematic diagram showing subcomponents implementing an exemplary line card component providing separation between the control and data planes thereof
FIG. 4 is a schematic diagram showing subcomponents implementing, in accordance with an exemplary embodiment of the invention, a data path protected line card subject to intelligent diagnosis and recovery; and
FIG. 5 is a schematic flow diagram showing, in accordance with the exemplary embodiment of the invention, exemplary steps of an exemplary intelligent fault mitigation process.

It will be noted that in the attached diagrams like features bear similar labels.

### Detailed description of the embodiments

Maximizing availability is achievable by:
- minimizing the number and duration of maintenance sessions;
- minimizing the number of failures; and
- upon experiencing a fault, minimizing the time spent in restoring service.

Minimizing the number and duration of maintenance sessions can be achieved via careful configuration, planning, extensive regression testing prior to deployment, etc. Great research efforts are being expended in minimizing the number and duration of maintenance sessions. Minimizing the number of failures can be achieved by improving the reliability of equipment in general, as well by careful configuration thereof. Great research efforts are being expended in developing reliable equipment and ensuring correct configuration thereof.

In accordance with an exemplary embodiment of the invention, minimizing the time spent in restoring service in experiencing a fault condition is addressed by implementing intelligent self-recovery functionality.

FIG. 4 is representative of a line card 410 / control card 440 pair having diagnostics components 452 and 450 respectively, wherein in accordance with the exemplary embodiment of the invention, an engineered response in resetting 413 at least the control plane 416 of the line card 410 falls under functionality of diagnostics components 450/ 452. The diagnostic components 450 and 452 may cooperate or act independently in determining whether to reset 413 the control plane 416 of the line card 410 without limiting the invention thereto. Employing a particular combination of off-line card 450 and self 452 diagnostic components is a design choice - for example dependent on the particular services supported. For certainty, in attempting to restore functionality of the line card 410, the diagnostic components 450 and 452 are also adapted to reset the data plane 214 if necessary.

Research into faults detectable through diagnostics 450/ 452, has lead to grouping experienced faults into:
- non-service affecting faults;
- service affecting failures, otherwise referred to as service outages; and
- possibly service affecting faults or partial service affecting faults.
A certain degree of predictability of the service impact the experienced faults would have is inferable for "non-service affecting faults" and "service affecting faults", whereas the service impact of "possibly service affecting faults" and "partial service affecting faults" cannot be known with certainty. Resetting the control plane 416 of the line card 410 in attempting to mitigate a "possibly service affecting fault" or a "partial service affecting fault" may do more harm than just ignoring thereof. Resetting the line card 410 in attempting to mitigate a "possibly service affecting fault" or "partial service affecting fault" may unnecessarily induce a service outages. When the service impact cannot be predicted, more information is necessary to make an informed decision towards a particular course of action.

In accordance with the exemplary embodiment of the invention, in employing a line card 410 separating the control plane 416 from the data plane 214, an intelligent fault recovery method is sought to maximize availability. All information available regarding a detected fault is employed to determine the best course of action towards restoring functionality.

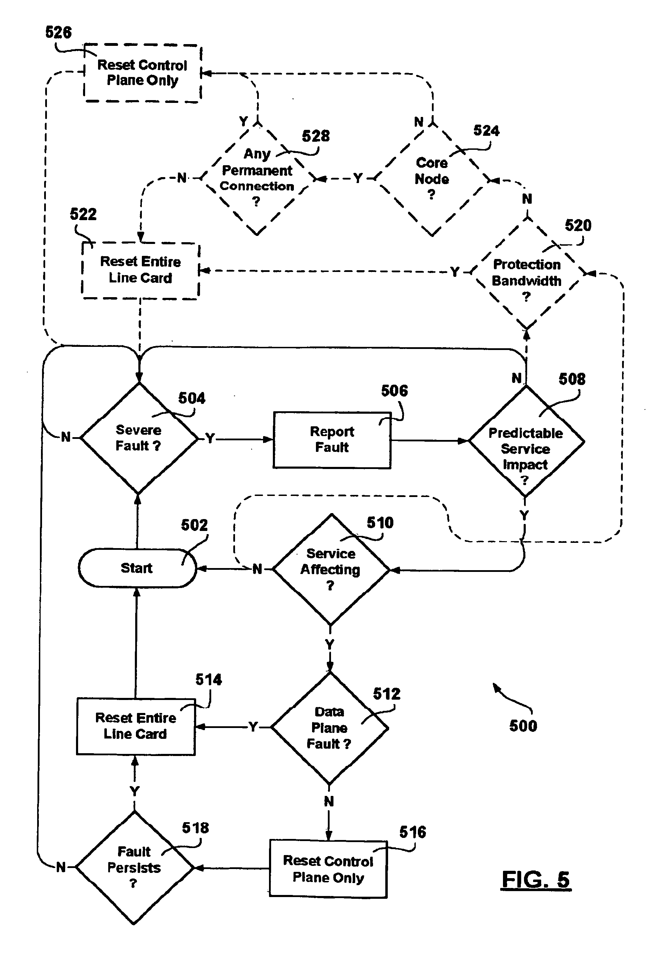

An exemplary intelligent fault recovery process 500, shown in FIG. 5, typically executing unattended in the context of a network node supporting line cards 410 with control plane and data plane separation, provides intelligent mitigation of experienced faults. The combination of diagnostic components 450, and 452 define a node-centric diagnostic context for severe fault surveillance - step 504. If severe faults are found in step 504, the faults are reported in step 506.

In accordance with the exemplary embodiment of the invention, if a detected fault is isolated exclusively to the control plane 416 of a line card 410, only a reset of the control plane 416 is performed while provisioned services remain unaffected.

Consider two exemplary types of faults, A and B:
A: the detected fault does not affect the data plane 214 of the line card 410, or
B: the detected fault is isolated to the data plane 214 of the line card 410; together with the three exemplary levels of service affecting conditions:
   - "non-service affecting fault",
   - " service affecting failure" , and
   - "possibly service affecting fault, or partial service affecting fault";
   the corresponding desired corrective actions include:

for non-service affecting faults:
   for A, continue and tolerate the fault to the extent possible,
   for B, continue and tolerate the fault to the extent possible;
for service affecting failures (outages):
   for A, reset the control plane 416 only in an attempt to minimize further service disruptions - if the fault persists, reset the entire line card 410,
   for B, reset entire line card 410 as services suffer outages; and
for possibly service affecting, or partial service affecting faults:
   for A, continue and tolerate the fault to the extent possible,
   for B, continue and tolerate the fault to the extent possible.

In accordance with an implementation of the exemplary embodiment of the invention, the engineered fault recovery response is configured by specifying actions to be taken, whether on a communications network wide basis, or on a network node by network node basis. Communications network nodes performing the intelligent fault recovery process include configurable component registers 222 and service registers 326 each associated with the diagnostics components 452 and 450 respectively, the registers specifying fault recovery actions. In accordance with another implementation of the invention, the configurable registers 222/ 326 used in specifying fault recovery actions form fault recovery rules implementing functionality of the intelligent fault recovery process 500.

In accordance with the intelligent fault recovery process 500, if the service impact of the experienced fault is not predictable, fact ascertained in step 508, the fault is tolerated and intelligent fault recovery process 500 resumes (following the continuous arrow) from step 504 of FIG. 5.

If the service impact of the experienced fault is predictable, 508, and if the fault being experienced is a "non-service affecting" fault, fact ascertained in step 510, the fault is ignored and the intelligent fault recovery process 500 resumes from step 504.

If the experienced fault is a service affecting fault, 510, the intelligent fault recovery process 500 determines, in step 512, whether the experienced fault is isolated to the data plane 214 only.

If the fault is isolated to the data plane 214, as ascertained in step 512, the line card 410 is reset in step 514.

If the "service affecting failure" does not affect the data plane 214, as ascertained in step 512, then the intelligent fault recovery process 500 performs a reset of the control plane 416 only, in step 516, attempting to mitigate the failure. If the fault persists, fact ascertained in step 518, then the intelligent fault recovery process 500 resumes from step 514 by resetting the entire line card 410, otherwise the intelligent fault recovery process 500 resumes from step 504.

Network surveillance techniques are typically employed to report failed communications network infrastructure. It is pointed out that while transport control and signaling protocols do not attempt to fix failed communications network infrastructure, the transport control and signaling protocols are employed to reroute transport paths around failed communications network infrastructure in the core of communications networks. However, the combination of surveillance techniques, and transport control and signaling protocols may not be able to reroute transport paths around edge network nodes because the transport paths originate and terminate on edge network nodes. Load balanced service connections automatically shift bandwidth between redundant transport paths. The use of protection equipment at edge nodes also provides for rerouting of transport paths.

In accordance with another implementation of the exemplary embodiment of the invention, meta-information about a network node experiencing a failure may also be included in fine-tuning the engineered fault recovery response. Exemplary information regarding whether a network node is a core or an edge node, whether a service connection benefits from load balancing, whether redundant protection equipment is employed, etc. is referred herein as meta-information. Meta-information is typically held and made available for perusal from a remote network management system for example via query/ response lookup message exchanges. For example, there is a difference as to how particular faults affect core network nodes as opposed to edge network nodes.

It is understood that the additional meta-information used in fine-tuning the intelligent fault recovery process 500 may further relate to the services being provisioned, further meta-information which specifies whether service connections are reroutable: ATM vs. IP/ MPLS, Permanent Virtual Circuit (PVC) vs. Switched PVC/ VC (SPVC/ SVC), Permanent Label Switched Path (P-LSP) vs. Switched LSP (S-LSP), etc. Permanent connections may be load balanced and/ or provisioned over redundant hot stand-by protection equipment, but by their very nature cannot be rerouted - only an automatic switchover to protection bandwidth is possible.

In accordance with another implementation of the exemplary embodiment of the invention, the intelligent fault recovery process 500 may be fine-tuned in mitigating an experienced fault by taking into account meta-information as shown in FIG. 5 as dashed steps and arrows. Where experienced faults were tolerated, for example, if the service impact of a particular experienced fault could not be ascertained in step 508, or the particular experienced fault was determined to be a "non-service affecting fault" in step 510, the intelligent fault recovery process 500 continues from step 520.

Conveyed content will automatically be switched onto protection equipment, such as a redundant line card 410, if protection equipment is employed (and protection bandwidth is available), as ascertained in step 520, allowing for the entire line card 410 to be reset in step 522.

If no protection bandwidth is available, as ascertained in step 520, then the intelligent fault recovery process 500 determines, in step 524, whether the communications network node experiencing the fault is a core network node. Currently provisioned transport paths will be automatically rerouted if no permanent connections have been established through the line card 410 experiencing the failure, as ascertained in step 528, and therefore it is safe to reset 522 the entire line card 410. If permanent connections have been established through the line card 410, as ascertained in step 528, or if the network node is an edge node, as ascertained in step 524, then only the control plane 416 may be safely reset in step 526.

In providing the engineered fault recovery response, it is understood that further similar steps may be taken based on further meta-information without limiting the invention.

Therefore, in accordance with the exemplary embodiment of the invention, the duration of outages is reduced by further analysis of the equipment employed, the manner in which equipment interoperates, the type of services provisioned, the severity of detected faults, etc. The unattended decision-making capability of a network node to restore degraded functionality is further improved by configuring reset behavior to mitigate effects of encountered fault conditions.

The embodiments presented are exemplary only, and persons skilled in the art would appreciate that variations to the above described embodiments may be made without departing from the scope of the invention. The scope of the invention is solely defined by the appended claims.

## Claims

1. An intelligent method for self-recovery from faults in a line card (210), the line card (210) having severable control (216) and data (214) planes, **characterized in that** it comprises steps of:
**a.** determining (510) whether a detected fault is a service affecting fault;
**b.** having detected a service affecting fault, determining (512) whether the detected fault does not affect the data plane (214); and
**c.** having determined that the data plane (214) is unaffected by the fault, resetting (516) the control plane (216) only in an attempt to restore functionality to the line card (210).

2. The method as claimed in claim 1, wherein the method further comprises steps of: resetting (514) the line card (210) in an attempt to restore functionality if the detected fault persists (518).

3. The method as claimed in claim 1, wherein the method further comprises a step of: resetting (514) the line card (210) in an attempt to restore functionality if the detected fault affects the data plane (214).

4. The method as claimed in claim 1, wherein the method further comprises prior steps of:
**a.** Determining (508) whether the detected fault does not have a predictable service impact; and
**b.** determining, based on meta-information, a reset response providing an engineered mitigation of the detected fault.

5. The method as claimed in claim 4, wherein subsequent to determining (508) that the detected fault does not have a predictable impact, the method further comprises steps of: determining (520) whether protection bandwidth is available to switch currently provisioned services thereto.

6. The method as claimed in claim 5, wherein if protection bandwidth is available, the method further comprises a step of: resetting (522) the entire line card (210) in an attempt to restore functionality to the line card (210), provisioned services being switched onto the protection bandwidth.

7. The method as claimed in claim 5, wherein determining (520) whether protection bandwidth is available, the method further comprises a step of:
determining whether redundant stand-by equipment associated with the line card (210) is available to switch provisioned services to said redundant stand-by equipment during a line card (210) reset.

8. The method as claimed in claim 5, wherein if protection bandwidth is not available, the method further comprises a step of: determining (524) whether the communications network node associated with the line card (210) is a core network node.

9. The method as claimed in claim 8, wherein if the communications network node is not a core network node the method further comprises a step of:
resetting (526) the control plane (216) of the line card (210) only in an attempt to restore functionality to the line card (210).

10. The method as claimed in claim 8, wherein if the communications network node is a core network node the method further comprises a steps of:
determining (528) whether at least one permanent connection is provisioned via the line card (210).

11. The method as claimed in claim 10, wherein if the at least one permanent connection is provisioned via the line card (210), the method further comprises a step of: resetting (526) only the control plane (216) of the line card (210) in an attempt to restore functionality to the line card (210).

12. The method as claimed in claim 10, wherein if no permanent connection is provisioned via the line card (210), the method further comprises a step of:
resetting (522) the line card (210) in an attempt to restore functionality to the line card (210).

13. The method as claimed in claim 4, wherein the method further comprises a step of: obtaining the meta-information.

14. The method as claimed in claim 13, wherein obtaining the meta-information the method further comprises a step of: querying a network management system.

15. The method as claimed in claim 1, wherein the method further comprises a prior step of: detecting the fault.

16. The method as claimed in claim 15, wherein the method further comprises a step of: reporting (506) the detected fault.

17. A line card (210) operable in a communications network node comprising:
**a.** a control plane (216) severable from a data plane (214) during a reset operation of the control plane (216) ensuring continued service provisioning via the line card (210); **characterized in that** it further comprises:
**b.** intelligent self-diagnostics logic for resetting the control plane (216) of the line card (210) often determining a service affecting fault, that does not affect the data plane.

18. The line card (210) claimed in claim 17, further comprising registers (222, 326) specifying actions to be taken in accordance with the engineered reset response.

19. The line card (210) claimed in claim 18, wherein the registers (222, 326) define rules specifying the actions to be taken in accordance with the engineered reset response.

20. A communications network node comprising:
**a.** at least one line card (210) having a control plane (216) severable from a data plane (214) during a reset operation of the control plane (216) ensuring continued service provisioning; and
**b.** intelligent diagnostics logic for resetting the control plane (216) of the line card (214) after determining a service affecting fault, that does not affect the data plane.

## Patentansprüche

1. Ein intelligentes Verfahren zur Selbstwiederherstellung bei Fehlern in einer Line-Card (210), wobei die Line-Card (210) trennbare Steuerebenen (216) und Datenebenen (214) aufweist, **dadurch gekennzeichnet, dass** das Verfahren die folgenden Schritte umfasst:
a. Ermitteln (510), ob ein erkannter Fehler ein einen Dienst beeinflussender Fehler ist;
b. nach Erkennen eines einen Dienst beeinflussenden Fehlers, Ermitteln (512), ob der erkannte Fehler nicht die Datenebene (214) beeinflusst; und
c. nachdem ermittelt wurde, dass die Datenebene (214) nicht von dem Fehler beeinflusst wird, Zurücksetzen (516) ausschließlich der Steuerebene (216), um zu versuchen, eine Funktionalität der Line-Card (210) wiederherzustellen (210).

2. Das Verfahren nach Anspruch 1, wobei das Verfahren weiterhin den Schritt des Zurücksetzens (514) der Line-Card (210) umfasst, um zu versuchen, eine Funktionalität wiederherzustellen, wenn der erkannte Fehler fortbesteht (518).

3. Das Verfahren nach Anspruch 1, wobei das Verfahren weiterhin einen Schritt des Zurücksetzens (514) der Line-Card (210) umfasst, um zu versuchen, eine Funktionalität wiederherzustellen, wenn der erkannte Fehler die Datenebene (214) beeinflusst.

4. Das Verfahren nach Anspruch 1, wobei das Verfahren weiterhin folgende vorausgehende Schritte umfasst:
a. Ermitteln (508), ob der erkannte Fehler keine voraussehbare Auswirkung auf einen Dienst hat; und
b. Ermitteln, auf der Basis von Metadaten, einer Reset-Antwort, welche eine technische Abschwächung des erkannten Fehlers gewährleistet.

5. Das Verfahren nach Anspruch 4, wobei im Anschluss an das Ermitteln (508), dass der erkannte Fehler keine voraussehbare Auswirkung hat, das Verfahren weiterhin den Schritt des Ermittelns (520), ob eine Reservebandbreite verfügbar ist, um momentan bereitgestellte Dienste auf diese zu schalten, umfasst.

6. Das Verfahren nach Anspruch 5, wobei, wenn eine Reservebandbreite verfügbar ist, das Verfahren weiterhin einen Schritt des Zurücksetzens (522) der kompletten Line-Card (210) umfasst, um zu versuchen, die Funktionalität der Line-Card (210) wiederherzustellen, wobei die bereitgestellten Dienste auf die Reservebandbreite geschaltet werden.

7. Das Verfahren nach Anspruch 5, wobei, zusätzlich zur Ermittlung (520), ob eine Reservebandbreite verfügbar ist, das Verfahren weiterhin einen Schritt des Ermittelns, ob eine der Line-Card (210) zugeordnete redundante Standby-Einrichtung verfügbar ist, um bereitgestellte Dienste während eines Zurücksetzens der Line-Card (210) auf die besagte redundante Standby-Einrichtung zu schalten.

8. Das Verfahren nach Anspruch 5, wobei, wenn keine Reservebandbreite verfügbar ist, das Verfahren weiterhin einen Schritt des Ermittelns (524), ob der der Line-Card (210) zugeordnete Kommunikationsnetzwerkknoten ein Kernnetzwerkknoten ist, umfasst.

9. Das Verfahren nach Anspruch 8, wobei, wenn der Kommunikationsnetzwerkknoten kein Kernnetzwerkknoten ist, das Verfahren weiterhin einen Schritt des Zurücksetzens (526) ausschließlich der Steuerebene (216) der Line-Card (210) umfasst, um zu versuchen, die Funktionalität der Line-Card (210) wiederherzustellen.

10. Das Verfahren nach Anspruch 8, wobei, wenn der Kommunikationsnetzwerkknoten ein Kernnetzwerkknoten ist, das Verfahren weiterhin einen Schritt des Ermittelns (528), ob zumindest eine permanente Verbindung über die Line-Card (210) bereitgestellt wird, umfasst.

11. Das Verfahren nach Anspruch 10, wobei, wenn zumindest eine permanente Verbindung über die Line-Card (210) bereitgestellt wird, das Verfahren weiterhin einen Schritt des Zurücksetzens (526) ausschließlich der Steuerebene (216) der Line-Card (210) umfasst, um zu versuchen, die Funktionalität der Line-Card (210) wiederherzustellen.

12. Das Verfahren nach Anspruch 10, wobei, wenn keine permanente Verbindung über die Line-Card (210) bereitgestellt wird, das Verfahren weiterhin einen Schritt des Zurücksetzens (522) der Line-Card (210) umfasst, um zu versuchen, die Funktionalität der Line-Card (210) wiederherzustellen.

13. Das Verfahren nach Anspruch 4, wobei das Verfahren weiterhin einen Schritt des Einholens der Metadaten umfasst.

14. Das Verfahren nach Anspruch 13, wobei, zusätzlich zum Einholen der Metadaten, das Verfahren weiterhin einen Schritt des Abfragens eines Netzwerkverwaltungssystems umfasst.

15. Das Verfahren nach Anspruch 1, wobei das Verfahren weiterhin einen vorausgehenden Schritt des Erkennens des Fehlers umfasst.

16. Das Verfahren nach Anspruch 15, wobei das Verfahren weiterhin einen Schritt des Meldens (506) des erkannten Fehlers umfasst.

17. Eine Line-Card (210) zur betriebsbereiten Anwendung in einem Kommunikationsnetzwerkknoten, umfassend:
a. Eine Steuerebene (216), welche während eines Zurücksetzungsvorgangs der Steuerebene (216) von einer Datenebene (214) trennbar ist, um die Bereitstellung eines fortlaufenden Dienstes über die Line-Card (210) zu gewährleisten; **dadurch gekennzeichnet, dass** sie weiterhin umfasst:
b. Eine intelligente Selbstdiagnose-Logik für das Zurücksetzen der Steuerebene (216) der Line-Card (210) nach Ermitteln eines einen Dienst beeinflussenden Fehlers, welcher nicht die Datenebene beeinflusst.

18. Die Line-Card (210) nach Anspruch 17, weiterhin umfassend Register (222, 326), welche die gemäß der technischen Reset-Antwort zu treffenden Maßnahmen spezifizieren.

19. Die Line-Card (210) nach Anspruch 18, wobei die Register (222, 326) Regeln definieren, welche die gemäß der technischen Reset-Antwort zu treffenden Maßnahmen spezifizieren.

20. Ein Kommunikationsnetzwerkknoten, umfassend:
a. Mindestens eine Line-Card (210) mit einer Steuerebene (216), welche während eines Zurücksetzungsvorgangs der Steuerebene (216) von einer Datenebene (214) trennbar ist, um die Bereitstellung eines fortlaufenden Dienstes zu gewährleisten; und
b. eine intelligente Selbstdiagnose-Logik für das Zurücksetzen der Steuerebene (216) der Line-Card (210) nach Ermitteln eines den Dienst beeinflussenden Fehlers, welcher nicht die Datenebene beeinflusst..

## Revendications

1. Procédé intelligent d'autocorrection de pannes dans une carte de ligne (210), la carte de ligne (210) présentant des plans de commande (216) et de données (214) séparables, **caractérisé en ce qu'**il comprend les étapes suivantes :
a. déterminer (510) si une panne détectée est une panne affectant le service ;
b. après avoir détecté une panne affectant le service, déterminer (512) si la panne détectée n'affecte pas le plan de données (214) ; et
c. après avoir déterminé que le plan de données (214) n'est pas affecté par la panne, réinitialiser (516) le plan de commande (216) uniquement dans le but de restaurer les fonctions de la carte de ligne (210).

2. Procédé selon la revendication 1, dans lequel le procédé comprend en outre les étapes suivantes : réinitialiser (514) la carte de ligne (210) dans le but de restaurer les fonctions si la panne détectée persiste (518).

3. Procédé selon la revendication 1, dans lequel le procédé comprend en outre l'étape suivante : réinitialiser (514) la carte de ligne (210) dans le but de restaurer les fonctions si la panne détectée affecte le plan de données (214).

4. Procédé selon la revendication 1, dans lequel le procédé comprend en outre les étapes précédentes :
a. déterminer (508) si la panne détectée n'a pas un impact prévisible sur le service ;
et
b. déterminer, sur la base des informations méta, une réponse de réinitialisation fournissant une atténuation mise au point de la panne détectée.

5. Procédé selon la revendication 4 dans lequel, après avoir déterminé (508) que la panne détectée n'a pas un impact prévisible, le procédé comprend en outre l'étape suivante :
déterminer (520) si la bande passante de protection est disponible pour commuter les services actuellement fournis vers celle-ci.

6. Procédé selon la revendication 5 dans lequel, si la bande passante de protection est disponible, le procédé comprend en outre l'étape suivante : réinitialiser (522) l'ensemble de la carte de ligne (210) dans le but de restaurer les fonctions de la carte de ligne (210), les services fournis étant commutés sur la bande passante de protection.

7. Procédé selon la revendication 5 dans lequel, lorsque l'on détermine (520) si la bande passante de protection est disponible ou non, le procédé comprenant en outre l'étape suivante :
déterminer si un équipement de secours associé à la carte de ligne (210) est disponible pour commuter des services fournis vers ledit équipement de secours durant une réinitialisation de la carte de ligne (210).

8. Procédé selon la revendication 5 dans lequel, si la bande passante de protection n'est pas disponible, le procédé comprend en outre l'étape suivante : déterminer (524) si le noeud de réseau de communications associé à la carte de ligne (210) est un noeud de coeur de réseau.

9. Procédé selon la revendication 8 dans lequel, si le noeud de réseau de communications n'est pas un noeud de coeur de réseau, le procédé comprend en outre l'étape suivante :
réinitialiser (526) le plan de commande (216) de la carte de ligne (210) uniquement dans le but de restaurer les fonctions de la carte de ligne (210).

10. Procédé selon la revendication 8 dans lequel, si le noeud de réseau de communications est un noeud de coeur de réseau, le procédé comprend en outre l'étape suivante :
déterminer (528) si au moins une connexion permanente est fournie par l'intermédiaire de la carte de ligne (210).

11. Procédé selon la revendication 10 dans lequel, si l'au moins une connexion permanente est fournie par l'intermédiaire de la carte de ligne (210), le procédé comprend en outre l'étape suivante : réinitialiser (526) uniquement le plan de commande (216) de la carte de ligne (210) dans le but de restaurer les fonctions de la carte de ligne (210).

12. Procédé selon la revendication 10 dans lequel, si aucune connexion permanente n'est fournie par l'intermédiaire de la carte de ligne (210), le procédé comprend en outre l'étape suivante : réinitialiser (522) la carte de ligne (210) dans le but de restaurer les fonctions de la carte de ligne (210).

13. Procédé selon la revendication 4, dans lequel le procédé comprend en outre l'étape suivante : obtenir les informations méta.

14. Procédé selon la revendication 13 dans lequel, dans l'étape d'obtention des informations méta, le procédé comprend en outre l'étape suivante : interroger un système de gestion de réseau.

15. Procédé selon la revendication 1, dans lequel le procédé comprend en outre l'étape précédente : détecter la panne.

16. Procédé selon la revendication 15, dans lequel le procédé comprend en outre l'étape suivante : signaler (506) la panne détectée.

17. Carte de ligne (210) fonctionnant dans un noeud de réseau de communications comprenant :
a. un plan de commande (216) séparable d'un plan de données (214) durant une opération de réinitialisation du plan de commande (216) garantissant une fourniture continue de services par l'intermédiaire de la carte de ligne (210) ; **caractérisée en ce qu'**elle comprend en outre :
b. une logique d'autodiagnostic intelligente pour réinitialiser le plan de commande (216) de la carte de ligne (210) après avoir déterminé une panne affectant le service, qui n'affecte pas le plan de données.

18. Carte de ligne (210) selon la revendication 17, comprenant en outre des registres (222, 326) spécifiant des actions à prendre conformément à la réponse de réinitialisation mise au point.

19. Carte de ligne (210) selon la revendication 18, dans laquelle les registres (222, 326) définissent des règles spécifiant les actions à prendre conformément à la réponse de réinitialisation mise au point.

20. Noeud de réseau de communications comprenant :
a. au moins une carte de ligne (210) présentant un plan de commande (216) séparable d'un plan de données (214) durant une opération de réinitialisation du plan de commande (216) garantissant une fourniture continue de services ; et
b. une logique de diagnostic intelligente pour réinitialiser le plan de commande (216) de la carte de ligne (214) après avoir déterminé une panne affectant le service, qui n'affecte pas le plan de données.
